Europäisches Patentamt

European Patent Office

Office européen des brevets

(11) Veröffentlichungsnummer: **0 231 023**
**A2**

## (12) EUROPÄISCHE PATENTANMELDUNG

(21) Anmeldenummer: **87101131.8**

(22) Anmeldetag: **28.01.87**

(51) Int. Cl.⁴: **H 02 M 5/458**

(30) Priorität: **29.01.86 DE 3602635**
**03.12.86 DE 3641308**

(43) Veröffentlichungstag der Anmeldung:
**05.08.87 Patentblatt 87/32**

(84) Benannte Vertragsstaaten:
**AT BE CH DE ES FR GB GR IT LI LU NL SE**

(71) Anmelder: **Weisse, Hans-Dietrich**
**Bellerivestrasse 55**
**CH-8034 Zürich (CH)**

(72) Erfinder: **Weisse, Hans-Dietrich**
**Bellerivestrasse 55**
**CH-8034 Zürich (CH)**

(74) Vertreter: **Stoffregen, Hans-Herbert, Dr. Dipl.-Phys. et al**
**Patentanwälte Strasse & Stoffregen Salzstrasse 11a**
**Postfach 2144**
**D-6450 Hanau/Main 1 (DE)**

(54) **Schaltungsanordnung mit einer von einer ein- oder mehrphasigen Spannung beaufschlagten, gesteuerten Gleichrichterbrückenschaltung und einem von dieser gespeisten Wechselrichter.**

(57) Gegenstand der Erfindung ist eine Wechselrichterschaltung, an die ein Induktionsmotor (1) angeschlossen ist, der eine Arbeitsmaschine antreibt. Es wird die Leistungsnahme aus dem Wechselstromnetz auf einen für den jeweiligen Lastfall minimalen Wert geregelt. Weiterhin wird die Frequenz der Wechselrichterschaltung der Last der Arbeitsmaschine derart angepaßt, daß eine von der Drehzahl der Arbeitsmaschine abhängige physikalische Größe gleich bleibt.

Fig. 1

EP 0 231 023 A2

**Beschreibung**

Schaltungsanordnung mit einer von einer ein- oder mehrphasigen Spannung beaufschlagten, gesteuerten
Gleichrichterbrückenschaltung und einem von dieser gespeisten Wechselrichter

Die Erfindung bezieht sich auf eine Schaltungsanordnung mit einer von einer ein- oder mehrphasigen Spannung beaufschlagten, gesteuerten Gleichrichterbrückenschaltung, die ein- und ausschaltbare Stromrichterventile enthält und an die eine Energiespeichereinrichtung angeschlossen ist, der ein Wechselrichter nachgeschaltet ist, dessen Stromrichterventile mit ihren Steuerelektroden an Ausgänge eines Mikrocomputers angeschlossen sind, der mit weiteren Ausgängen an die Steuerelektroden der Stromrichterventile der Gleichrichterbrückenschaltung angeschlossen ist, wobei der Wechselrichter einen Induktionsmotor speist, dessen Drehzahl durch die Frequenz des Wechselrichters steuerbar ist.

Eine Schaltungsanordnung der vorstehend beschriebenen Art ist bereits vorgeschlagen worden (Deutsche Patentanmeldung P 36 02 635).

Mit dieser Schaltungsanordnung können die Stromrichterventile in Anschnitt-, Abschnitt- oder Ausschnittarbeitsweise derart betrieben werden, daß das Wechsel- oder Drehstromnetz von der Lieferung von Blindleistung entlastet wird. Die Schaltung hat einen relativ einfachen Aufbau und einen hohen Wirkungsgrad.

Der Erfindung liegt die Aufgabe zugrunde, eine Schaltungsanordnung der eingangs beschriebenen Gattung dahingehend weiterzuentwickeln, daß die Drehzahl des eine Last antreibenden Induktionsmotors auf einen für den jeweiligen Belastungsfall möglichst günstigen Wert eingestellt wird.

Die Aufgabe wird erfindungsgemäß dadurch gelöst, daß die Spannung am Eingang des Wechselrichters über einen Analog-Digital-Umsetzer dem Mikrocomputer zuführbar ist, in dem eine Sollwertkennlinie der Spannung des Eingangs des Wechselrichters als Funktion der Frequenz des Wechselrichters gespeichert ist, daß die Spannung am Eingang des Wechselrichters mit der Spannung der Sollwertkennlinie verglichen wird und daß die Frequenz des Wechselrichters und die Spannung am Eingang des Wechselrichters verändert werden, bis ein Spannungswert der Sollwertkennlinie und die Spannung am Eingang des Wechselrichters einander entsprechen.

Mit dieser Anordnung kann die Synchrondrehzahl des Induktionsmotors auf die von der Kennlinie für die jeweiligen Belastungszustände vorgegebenen Werte geregelt werden, ohne daß ein die Drehzahl unmittelbar erfassender Meßwertgeber vorhanden ist. Die Spannung am Wechselrichtereingang wird zur Istwerterfassung ausgenutzt. Es wird also eine elektrische Größe statt einer mechanischen Größe erfaßt.

Hierdurch vereinfacht sich der Aufbau der Regeleinrichtung erheblich. Störanfällige Sensoren mechanischer Größen werden eingespart. Die Kennlinie wird vorzugsweise auf eine optimale Betriebsweise des Induktionsmotors eingestellt. Der Induktionsmotor kann deshalb mit sehr gutem Wirkungsgrad arbeiten.

Bei einer bevorzugten Ausführungsform ist die Spannung am Eingang des Wechselrichters der Frequenz des Wechselrichters proportional, wobei eine Kreiselpumpe, ein Kreiselverdichter oder ein Lüfter mit dem Induktionsmotor verbunden ist.

Mit dieser Anordnung kann die Leistungsaufnahme eines Lüfters oder einer Kreiselpumpe mit hohem Wirkungsgrad gesteuert werden. Die Kreiselpumpe fördert vorzugsweise ein strömendes Medium in einem Rohrleitungssystem. Wird z.B. durch ein Ventil in einer Rohrleitung die Fördermenge gedrosselt, dann erhöht sich die Spannung am Wechselrichtereingang bei gleichbleibender Motordrehzahl. Die Spannungserhöhung wird als Istwert im Mikrocomputer verarbeitet. Es wird ein der Spannungsänderung entsprechender neuer Betriebspunkt auf der Kennlinie durch Änderung der Frequenz und der Wechselrichtereingangsspannung mittels der Regelung eingestellt. Dieser Betriebspunkt entspricht einer Arbeitsweise der Kreiselpumpe mit minimalen Energieverlusten. Insbesondere wird durch die vorstehend erwähnten Maßnahmen der Differenzdruck im Rohrleitungsnetz auf einem gleichbleibenden Wert gehalten. Die Drehzahl der Kreiselpumpe wird also so geführt, daß der Differenzdruck des strömenden Mediums trotz unterschiedlicher Einstellung der Drosseln gleich bleibt.

Vorzugsweise wird das dem Analog-Digital-Umsetzer entnommene Bitmuster bei einer mit dem Wechselrichter erzeugten Frequenz mit dem im Mikrocomputer zu dieser Frequenz gespeicherten Bitmuster verglichen, wobei bei einer Abweichung die Frequenz des Wechselrichters und die Spannung am Eingang des Wechselrichters über die Stromrichterventile der Gleichrichterbrückenschaltung so lange verändert werden, bis die Bitmuster übereinstimmen.

Treten bei der jeweiligen von der Synchrondrehzahl abhängigen Drehzahl des Induktionsmotors Laständerungen auf, dann ergeben sich ausgeprägte Änderungen der Spannung am Eingang des Wechselrichters aufgrund der zwischen Gleichrichter und Wechselrichter angeordneten besonderen Energiespeichereinrichtung. Diese Spannungsänderungen werden erfaßt. Für jede innerhalb eines vorgegebenen Arbeitsbereiches des Induktionsmotors vorhandene Leistungsaufnahme ist ein bestimmter Spannungs-/Frequenzwert optimal. Dieser wird bei einer von einer Laständerung ausgelösten Spannungsänderung neu eingestellt. Die vom Mikrocomputer vorgenommene Spannungsänderung kann der Frequenzänderung proportional sein. Bei einer von einer Laständerung hervorgerufenen Spannungsänderung am Eingang des Wechselrichters werden die Frequenz und die Eingangsspannung entlang einer Kurve in einem Eingangsspannung-Frequenz-Diagramm verschoben, bis ein Schnittpunkt mit der gespeicherten Sollwertkennlinie auftritt. Hierdurch ergibt sich eine optimale Leistungsanpassung, ohne daß der Strom erfaßt werden muß. Es lassen sich damit standardisierte Sollwertkennlinien für Induktionsmotore gewinnen.

Es ist günstig, wenn die ein- und ausschaltbaren Stromrichterventile in der Gleichrichterbrückenschaltung bipolare Transistoren sind, deren Basen jeweils über die Drain-Source-Strecken von MOS-Feldeffekttransistoren an den netzseitigen Eingang der Gleichrichterbrückenschaltung gelegt sind, wobei die Gate-Elektroden der MOS-Feldeffekttransistoren mit Ausgängen des Mikrocomputers verbunden sind.

Die Umschaltung der Stromrichterventile vom leitenden in den nichtleitenden Zustand und umgekehrt beansprucht nur wenig Zeit, so daß auch die Stromwärmeverluste während der Umschaltung nur gering sind. Vorzugsweise sind die bipolaren Transistoren mit den Feldeffekttransistoren in einem Chip integriert. Diese Schaltungen werden als BIPMOS-Schaltungen bezeichnet.

Vorzugsweise enthält die Energiespeichereinrichtung mindestens eine, zwischen der Gleichrichterbrückenschaltung und dem Wechselrichter angeordnete Drossel und mindestens einen zum Eingang des Wechselrichters parallel geschalteten Kondensator. An einer derartigen Anordnung wirken sich bereits kleine Laständerungen am Induktionsmotor als ausreichend große Spannungsänderungen aus, die über den Analog-Digital-Umsetzer festgestellt werden.

Vorzugsweise sind die Stromrichterventile des Wechselrichters bipolare Transistoren, deren Basen jeweils über die Drain-Source-Strecken von MOS-Feldeffekttransistoren an den gleichstromseitigen Eingang des Wechselrichters gelegt sind, wobei die Gate-Elektroden der MOS-Feldeffekttransistoren zur Steuerung der Frequenz der ein- oder mehrphasigen Ausgangsspannung des Wechselrichters mit Ausgängen des Mikrocomputers verbunden sind. Der Wechselrichter hat bei dieser Ausführungsform die gleichen Stromrichterventile und Ansteuerschaltungen wie die Gleichrichterbrückenschaltung, so daß eine wirtschaftliche Fertigung des gesamten Gerätes möglich ist.

Die Gate-Elektroden der MOS-Feldeffekttransistoren sind je über eine galvanische Trennstelle mit dem jeweiligen Ausgang des Mikrocomputers verbunden. Damit werden Störspannungen, die aus dem Netz zur Brückenschaltung gelangen, vom Mikrocomputer ferngehalten.

Bei einer besonders zweckmäßigen Ausführungsform sind die Gate-Elektroden der MOS-Feldeffekttransistoren an Ausgänge von Zweirichtungs-Verstärkern mit einem Paar komplementärer Ausgangstransistoren angeschlossen, die von Signalen des Mikrocomputers steuerbar sind. Mit dieser Anordnung lassen sich steile Flanken erzeugen, so daß geringe Verluste während der Umschaltung der Stromrichterventile vom leitenden in den nichtleitenden Zustand entstehen.

Die vom Mikrocomputer aufzubringende Leistung zum Ein- und Ausschalten der Stromrichterventile ist nur gering. Die Zweirichtungs-Verstärker haben kleine Innenwiderstände. Die Kapazitäten der Gate-Elektroden der MOS-Feldeffekttransistoren können jeweils in sehr kurzer Zeit umgeladen werden. Es lassen sich deshalb kurze Übergangszeiten zwischen dem leitenden und nichtleitenden Zustand der Feldeffekttransistoren und damit der Stromrichterventile erreichen. Durch diese kurzen Übergangszeiten ist es möglich, nicht nur eine Anschnitt- und Abschnittsteuerung, sondern auch eine Ausschnittsteuerung je Halbperiode der Netzspannung durchzuführen, falls dies für eine schnelle Anpassung der Spannung an die jeweilige Motordrehzahl erforderlich sein sollte.

Vorzugsweise ist die Basis des jeweiligen bipolaren Transistors weiterhin über einen Widerstand mit dem Emitter verbunden. Sobald der zugeordnete MOS-Feldeffekttransistor in den nichtleitenden Zustand übergeht, herrscht an der Basis des bipolaren Transistors ein Potential, das den Transistor sperrt.

Es ist zweckmäßig, wenn die Basen der komplementären Transistoren des jeweiligen Zweirichtungs-Verstärkers über einen Optokoppler mit dem entspechenden Ausgang des Mikrocomputers verbunden sind. Zwischen den Stromrichterventilen der halbgesteuerten Gleichrichterbrückenschaltung und den für deren Steuerung benötigten Ausgängen des Mikrocomputers ist hierdurch eine galvanische Trennung vorhanden, so daß der Mikrocomputer vor Störungen aus dem Netz geschützt wird. Derartige Störungen sind z.B. Störspannungen, die der Netzspannung überlagert sind. Durch die Energiespeicherung im Gleichstromzwischenkreis werden derartige Überspannungen, nachdem sie durch die Stromrichter ventile gelangt sind, stark gedämpft, so daß sie im Wechselrichter praktisch nicht mehr von Belang sind. Es ist daher nicht notwendig, zwischen den Gate-Elektroden der Feldeffekttransistoren des Wechselrichters und den zugeordneten Steuerausgängen des Mikrocomputers eine galvanische Trennung vorzusehen. Falls erforderlich, kann aber auch hier eine galvanische Trennung vorgesehen sein.

Besonders günstig ist es, wenn der bipolare Transistor eines jeden Stromrichterventils der Gleichrichterbrückenschaltung zumindest zusammen mit dem MOS-Feldeffekttransistor in einem Halbleiterkristall integriert ist. Eine solche Vorrichtung hat nur wenige externe Anschlüsse, so daß sie schnell und einfach montiert werden kann.

Vorteilhaft ist es, wenn auch der Basis-Emitterwiderstand des bipolaren Transistors im Halbleiterkristall integriert ist. Damit läßt sich ein Halbleiterkristall mit drei Anschlüssen schaffen, von denen einer für die Verbindung mit dem Netz, der zweite für die Verbindung mit dem Zweirichtungs-Verstärker und der dritte für die Verbindung mit einem gleichstromseitigen Ausgang der Gleichstrombrückenschaltung bestimmt ist.

Auch der als Totem-Pole-Schaltung bezeichnete Zweirichtungs-Verstärker eignet sich für eine Integration mit zumindest dem MOS-Feldeffekttransistor. Eine Integration der Totem-Pole-Schaltung und des MOS-Feldeffekttransistors, z.B. in einem Chip oder zusammen mit den entsprechenden Elementen der anderen Brückenzweige ist besonders vorteilhaft, da sie für Stromrichterventile unterschiedlicher Leistung eingesetzt werden kann. Die Anzahl der Ausgänge eines solchen Halbleiterkristalls ist gering, da die gleichstromseitigen Ausgänge der Totem-Pole-Schaltungen an einem gemeinsamen Anschluß gelegt werden können. Ebenso ist es möglich, die Basis-Emitterwiderstände für die bipolaren Transistoren in den Halbleiterkristall zu integrieren, um die Anzahl der erforderlichen Anschlüsse noch stärker zu reduzieren.

Durch die Verwendung eines bipolaren Transistors als separates Bauelement läßt sich eine unerwünschte Erwärmung der integrierten Schaltung vermeiden. Darüber hinaus kann das Stromrichterventil besser gekühlt werden.

Bei einer bevorzugten Ausführungsform enthält der Mikrocomputer einen 8-BIT-Mikroprozessor, einen Programmspeicher, einen Speicher mit wahlfreiem Zugriff, mindestens einen Ereigniszähler bzw. internen Zeitgeber und Eingabe-, Ausgabeschaltungen für den Anschluß an die Stromrichterventile der Gleichrichterbrückenschaltung an die Feldeffekttransistoren des Wechselrichters und an eine Netzstrommeßeinrichtung sowie an eine Netzspannungsmeßeinrichtung, wobei ein Befehlszyklus von 5 bis 10 μsec vorgesehen ist. Mit einem derartigen Mikrocomputer ist es möglich, die Phasenanschnitt- und Phasenabschnittsteuerung oder die Ausschnittsteuerung unter Anpassung an die Drehzahl und die Drehzahlsteuerung innerhalb der durch die Periode der Netzfrequenz vorgegebenen Zeit durchzuführen.

Die Erfindung wird im folgenden anhand eines in einer Zeichnung dargestellten Ausführungsbeispiels näher beschrieben, aus dem sich weitere Einzelheiten, Merkmale und Vorteile ergeben.

Es zeigen:

Fig. 1 ein Schaltbild einer Anordnung zur Regelung eines Induktionsmotors,

Fig. 2 eine Sollwertkennlinie der Gleichspannung am Eingang eines den Induktionsmotor speisenden Wechselrichters in Abhängigkeit von der Frequenz des Wechselrichters für eine bestimmte Motortype und Last,

Fig. 3 ein Schema des Ablaufs der Schritte zur Regelung des Induktionsmotors,

Fig. 4 ein Schaltbild eines Strangs einer Gleichstrombrückenschaltung oder Wechselrichterschaltung mit der Ansteuerschaltung für ein Stromrichterventil,

Fig. 5 ein Schaltbild eines Teils einer Gleichstrombrückenschaltung mit einer anderen Ausführungsform einer Ansteuerschaltung,

Fig. 6 ein Schaltbild mit verschiedenen galvanischen Trennstufen für die Ansteuerung von Stromrichterventilen,

Fig. 7 nähere Einzelheiten einer Kopplung mit Piezo-Zündkopplern und

Fig. 8 nähere Einzelheiten einer Kopplung mit einem Optokoppler.

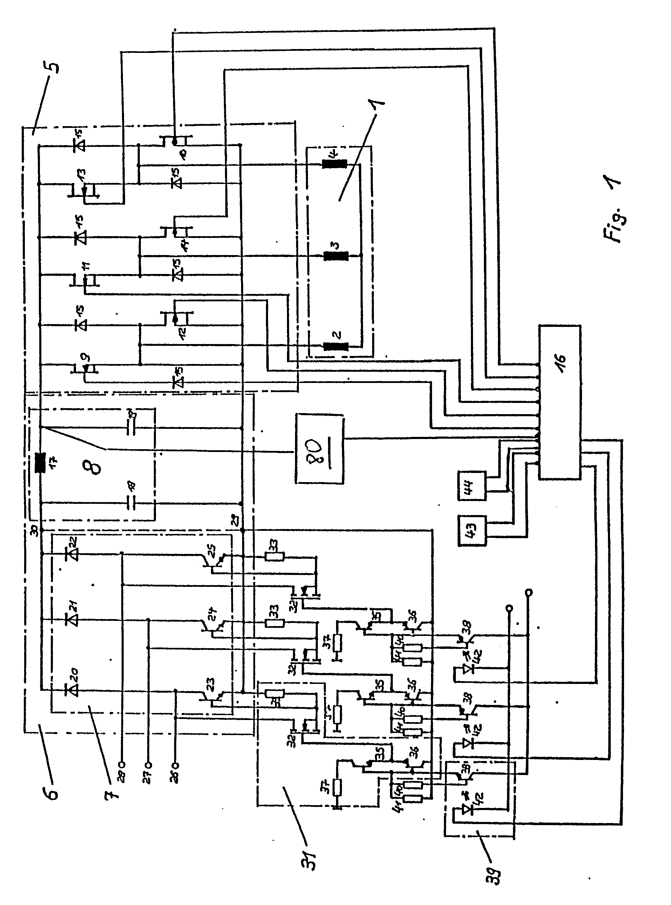

Eine Anordnung zur Steuerung oder Regelung eines Induktionsmotors (1), dessen drei Phasenwicklungen (2), (3), (4) in Fig. 1 dargestellt sind, enthält einen Wechselrichter (5) und einen Gleichrichterkreis (6) mit einer symmetrisch halbgesteuerten Gleichrichterbrückenschaltung (7) und einer an diese angeschlossenen Energiespeichereinrichtung (8). Es handelt sich bei dem Induktionsmotor (1) um einen Dreiphasenmotor. Der Wechselrichter (5) enthält daher sechs Stromrichterventile, die z.B. als Leistungs-Feldeffekttransistoren (9), (10), (11), (12), (13), (14) ausgebildet sind. Es handelt sich um n-Kanal-Sperrschichtfeldeffekttransistoren. Parallel zu jedem Feldeffekttransistoren (9) bis (14) ist eine Freilaufdiode (15) geschaltet. Die Gate-Elektroden der Feldeffekttransistoren (9) bis (14) sind jeweils mit nicht näher bezeichneten Anschlüssen eines Mikrocomputers (16) verbunden. Der Mikrocomputer (16) gibt periodische Ansteuersignale als Spannungsblöcke an die Feldeffekttransistoren (9) bis (14) aus. Die Frequenz der Ansteuersignale bestimmt die Drehzahl des Induktionsmotors (1). Die Energiespeichereinrichtung (8) des Gleichstromzwischenkreises, der den Wechselrichter (5) speist, enthält eine Drossel (17) und zwei Kondensatoren (18), (19), die je parallel zum Eingang und zum Ausgang der Energiespeichereinrichtung (8) geschaltet sind. Damit wird die Gleichspanung geglättet.

Die Gleichrichterbrückenschaltung (7) enthält in drei zueinander parallelen Brückenkreisen je eine Diode (20), (21), (22) und ein ein- und ausschaltbares Stromrichterventil, das als bipolarer Transistor (23), (24), (25) ausgebildet ist. Die drei Brückenkreise sind je an den Verbindungsstellen zwischen den Anoden der Dioden (20), (21), (22) und der Transistoren (23), (24), (25) über Klemmen (26), (27), (28) an die Phasen R, S, T bzw. L1, L2, L3 eines Drehstromnetzes angeschlossen. Die Transistoren (23), (24), (25) sind jeweils mit ihen Kollektor-Emitter-Strecken an die Klemmen (26), (27), (28) und einen gleichstromseitigen Ausgang (29) (- Leitung) angeschlossen. Die Dioden (20), (21), (22) sind mit ihren Kathoden an den anderen gleichstromseitigen Ausgang (30) (+ Leitung) der Gleichrichterbrückenschaltung (7) angeschlossen.

Die bipolaren Transistoren (23), (24), (25) weisen jeweils gleich ausgebildete Ansteuerschaltungen auf, von denen in Fig. 1 eine Ansteuerschaltung mit (31) bezeichnet ist. Es wird deshalb im folgenden nur eine Ansteuerschaltung eingehend erläutert.

Die Basis des jeweiligen Transistors (23), (24), (25) ist mit der Source-Elektrode eines MOS-Feldeffekttransistors (32) verbunden, dessen Drain-Elektrode an den Kollektor des jeweiligen Transistors (23), (24), (25) angeschlossen ist. Der jeweilige Transistor (23), (24), (25) bildet mit dem zugehörigen Feldeffekttransistor (32) eine Darlington-Schaltung. Weiterhin ist die Basis jedes Transistors (23), (24), (25) über einen Widerstand (33) mit dem Emitter verbunden. Es handelt sich bei den in Fig. 1 gezeigten Transistoren (23), (24), (25) um npn-Transistoren. Die Gate-Elektrode des Feldeffekttransistors (32) ist mit dem Ausgang eines Zweirichtungsverstärkers (34) verbunden, einer Anordnung, die zwei zueinander komplementäre Transistoren (35), (36) an ihrem Ausgang enthält. Der Zweirichtungsverstärker ist nach Art einer Gegentaktschaltung ausgebildet. Die Transistorgegentaktstufe enthält die Transistoren (35), (36), deren Kollektor-Emitter-Strecken in Reihe angeordnet sind. In Reihe mit dem npn-Transistor (35) ist in dessen Kollektorkreis ein Widerstand (37) angeordnet. Der zweite Anschluß des Widerstandes (37) wird von einer positiven Betriebsspannung, z.B. 15 V, gespeist. Der Emitter des pnp-Transistors (36) ist mit dem Ausgang (29) verbunden, der gegenüber dem Widerstand (37) negativ ist. Der Emitter des Transistors (35) ist mit dem Emitter des Transistors (36) verbunden. Die gemeinsame Verbindungsstelle bildet den Ausgang der Totem-Pole-Schaltung. Die Basen der beiden Transistoren (35), (36) sind miteinander verbunden und an den Emitter eines Phototransistors (38) in einem Optokoppler (39) angeschlossen. Der Kollektor des Transistors (38) ist an das positive Potential der Betriebsspannungsquelle, z.B. 15 V, gelegt. Zwischen der Basis des Phototransistors (38) und dem Emitter ist ein Widerstand (40) angeordnet. Ein weiterer Widerstand (41) ist zwischen den Basen der Transistoren (35) und (36) und dem Ausgang (29) angeordnet. Die Lumineszenzdiode (42) des Optokopplers (39) ist zwischen Bezugspotential von OV und einem Ausgang des Mikrocomputers (16) angeordnet. Bei langsamer Ansteuerung kann die Komplementär-Stufe mit den Transistoren (35) und (36) eingespart werden. In einem solchen Fall kann der Transistor des Optokopplers direkt an das Gate des zugeordneten MOS-Feldeffekttransistors gelegt sein.

Wenn der Ausgang des Mikrocomputers (16) ein niedriges (low) Potential abgibt, ist der Phototransistor (38) nichtleitend. Der Transistor (36) ist leitend, während der Transistor (35) nichleitend ist. Der n-Kanal-MOS-Feldeffekttransistor (32) wird mit einem negativen Gate-Potential beaufschlagt und sperrt daher. Der Transistor (23) sperrt ebenfalls. Beaufschlagt der Mikrocomputer (16) die Lumineszenzdiode (42) mit hohem (high) Potential, dann steuert diese den Phototransistor (38) leitend, wodurch die Basen der Transistoren (35), (36) positives Potential erhalten. Hierdurch wird der Transistor (36) nichtleitend, während der Transistor (35) leitend gesteuert wird. Über den Transistor (35) gelangt positives Potential zur Gate-Elektrode des MOS-Feldeffektransistors (32), der somit leitend gesteuert wird. Über den Feldeffekttransistor (32) wird der Basis des Transistors (23) ein so hoher Basisstrom zugeführt, daß der Transistor (23) leitend wird und den Strom im Brückenkreis übernimmt.

Der Zweirichtungsverstärker (34) hat sowohl bei hohem als auch bei niedrigem Ausgangspotential einen niedrigen Innenwiderstand. Daher kann die Kapazität der Gate-Elektrode des MOS-Feldeffektransistors (32) sehr schnell umgeladen werden. Dies bedeutet, daß der Feldeffekttransistor (32) schnell vom leitenden in den nichtleitenden Zustand und entsprechend vom nichtleitenden in den leitenden Zustand umgesteuert werden kann. Entsprechend schnell wird der Transistor (23) leitend bzw. nichtleitend gesteuert. Je Halbperiode der Netzspannung ist deshalb eine Anschnitt- und Abschnittsteuerung oder eine Ausschnittsteuerung möglich.

Die Ansteuersignale für die Lumineszenzdioden (42) werden vom Mikrocomputer (16) so vorgegeben, daß über die Anschnitt- und Abschnittsteuerung oder Ausschnittsteuerung der Transistoren (23), (24), (25) einerseits die Spannung am Wechselrichter (5) an die Drehzahl des Induktionsmotors (1) angepaßt wird und andererseits die vom Netz gelieferte Blindleistung möglichst gering ist. Die Blindleistung wird durch den gesteuerten Brückengleichrichter (7) und durch die Drossel (17) im Gleichstromzwischenkreis beeinflußt, so daß die dem Netz entnommene Blindleistung sehr gering ist. Bedarfsweise kann sie auch auf kapazitive Werte eingestellt werden. Für die an die Drehzahl angepaßte Spannung kann eine Tabelle im Mikrocomputer (16) enthalten sein, die den Zusammenhang zwischen der Spannung in Abhängigkeit von der Drehzahl des Induktionsmotors (1) angibt. Beispielsweise wird die Höhe der Spannung über die Anschnitte der Halbperioden der Netzspannung gesteuert. Die Reduzierung der Blindleistung erfolgt selbsttätig. Je eine Meßeinrichtung (43) und (44) für den Netzstrom und die Netzspannung können an den Mikrocomputer (16) angeschlossen sein, in dem die Istphasenverschiebung zwischen Strom und Spannung festgestellt und mit einer Sollphasenverschiebung verglichen wird. Über eine An- und Abschnittsteuerung oder eine Ausschnittsteuerung der Halbperioden der Netzspannung kann der Blindleistungsbezug auf einen möglichst kleinen Wert eingestellt werden. Hierfür kann eine Meßeinrichtung (43) für den Netzstrom und eine Meßeinrichtung (44) für die Netzspannung vorgesehen sein.

Der Mikrocomputer (16) enthält vorzugsweise einen Mikroprozessor, der über einen Bus mit einem Programmspeicher, einem Speicher für wahlfreien Zugriff, mindestens einem Ereigniszähler bzw. Zeitgeber und mit Ein-, Ausgabeschaltungen verbunden ist. Eine Zykluszeit für die Befehlsausführung von etwa 5 µsec bis etwa maximal 10 µsec reicht aus, um eine schnelle Regelung der Spannung zur Anpassung an die Drehzahl und zur Blindleistungsreduzierung zu erzielen. Es kann beispielsweise ein Ein-Chip-Mikrocomputer mit 8-Bit der Type 8748 der Firma INTEL verwendet werden. Über die Eingabe-, Ausgabeschaltungen ist der Mikrocomputer (16) mit den Leistungs-Feldeffekttransistoren (9) bis (14) über die drei Lumineszenzdioden (42) verbunden, die den Ansteuerschaltungen (31) vorgeschaltet sind. Vorzugsweise sind hierbei zwischen der Ausgabeschaltung des Mikrocomputers (16) und den Gate-Elektroden der Leistungsfeldeffekttransistoren (9), (10), (11), (12), (13), (14) galvanische Trennstufen vorgesehen.

Der Eingang des Wechselrichters (5) ist mit einem Analog-Digital-Umsetzer (80) verbunden, der ausgangsseitig an einen Eingang des Mikrocomputers (16) angeschlossen ist. Die Verbindung des Analog-Digital-Umsetzers (80) mit dem Mikrocomputer (16) erfolgt über dessen Eingabe-, Ausgabeschaltungen. Der Analog-Digital-Umsetzer (80) hat z.B. am Ausgang eine Datenbreite von 8 bit. Es kann auch ein Mikrocomputer mit einem Analog-Digital-Wandler verwendet werden, der integraler Bestandteil des Computers ist.

Der Induktionsmotor (1) treibt vorzugsweise einen Lüfter, eine Kreiselpumpe oder einen Kreiselverdichter an. Die Kreiselpumpe ist insbesondere in einem Rohrabschnitt eines Brauchwasserfördersystems für z.B. Warmwasser angeordnet, deren Differenzdruck bei unterschiedlicher Drosselung des Förderstroms auf einem gleichbleibenden Wert gehalten werden soll. Die in Fig. 1 gezeigte Anordnung enthält hierfür einen Regelkreis, in dem sich jedoch kein Istwertgeber für den Differenzdruck z.B. Manometer, befindet. Als Istwertgeber für den Differenzdruck wird eine elektrische Größe verwendet, die mit einem einfacheren Sensor erfaßt werden kann. Bei diesem Sensor handelt es sich um eine Spannungsmeßeinrichtung, die den Analog-Digital-Umsetzer (80) aufweist, dem eine analoge Spannung zugeführt wird und der einen entsprechenden Digitalwert ausgibt, insbesondere in hexadezimaler Form.

Ein erster Steuerkreis wird durch den Mikrocomputer (16) und die Transistoren (23), (24), (25) nebst deren Ansteuerkreisen gebildet. In diesem Steuerkreis wird für einen gegebenen Lastfall, d.h. die jeweilige Belastung des Induktionsmotors (1), mit Hilfe einer Anschnitt-, Abschnitt- oder Ausschnittsteuerung über die Spannung am Ausgang des Gleichrichterkreises bei gleichbleibender Frequenz des Wechselrichters (5) die Leistungsaufnahme aus dem Netz auf möglichst geringe Werte eingestellt, um die Verluste im Wechselrichter, die Blindstromverluste im Netz und die Verluste im Induktionsmotor klein zu halten. Neben diesem Steuerkreis ist ein zweiter Kreis vorhanden, der die Spannung am Eingang des Wechselrichters (5) als Istwert einer Regelgröße über den Analog-Digital-Umsetzer (80) dem Mikro computer (16) zuführt, der als Stellglieder die Leistungsfeldeffekttrannsistoren (9) bis (14) und/oder die bipolaren Transistoren (23), (24), (25) steuert.

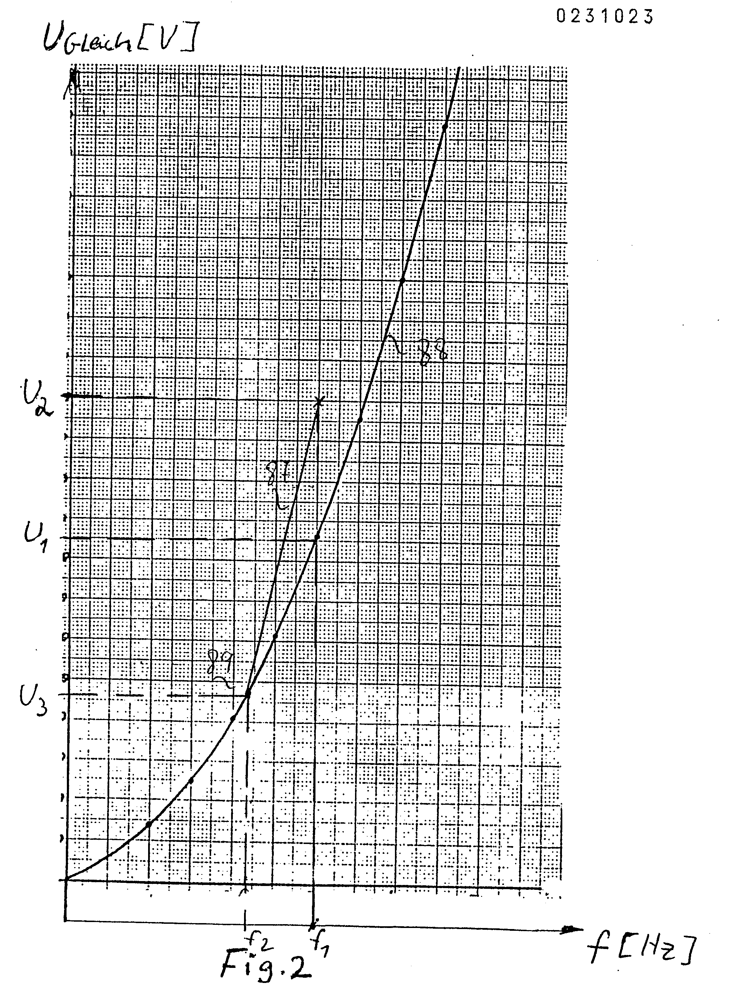

In einem nicht näher dargestellten Speicher, z.B. einem PROM oder EPROM, des Mikrocomputers (16) ist eine Sollwertkennlinie gespeichert, die in Fig. 2 dargestellt ist. Die Sollwertkennlinie gibt für einen optimalen Betrieb des aus dem Induktionsmotor (1) und der Kreiselpumpe bestehenden Aggregats die Spannung am Eingang des Wechselrichters (5) in Abhängigkeit von der Frequenz des Wechselrichters (5) an. Berücksichtigt ist hierbei, daß das für die Kreiselpumpe aufzubringende Moment dem Quadrat der Drehzahl proportional ist, d.h. $M \sim n^2$, wobei mit M das Moment und mit n die Drehzal bezeichnet sind. Die Sollwertkurve ist auf eine bestimmte Motortype und Motorleistung sowie Pumpentype und Pumpenleistung abgestimmt.

Der optimale Arbeitspunkt auf der Sollwertkennlinie wird wie folgt eingestellt.

Nach dem Anlegen der Netzspannung an die Anordnung gemäß Fig. 1 wird nach Ablauf einer gewissen Zeitspanne, in der der Induktionsmotor (1) hochläuft, in einem ersten Schritt (81) die Eingangsspannung U des Gleichrichterkreises (6) gemessen und gespeichert. Die Messung wird periodisch, z.B. nach einer oder mehreren Netzperioden wiederholt. Auch die Speicherung der Meßwerte wird fortgesetzt. Dies kann so erfolgen, daß immer mindestens zwei Meßwerte zugleich gespeichert sind, von denen der zuerst gespeicherte durch den jeweiligen neuen Meßwert im Speicher überschrieben wird.

In einem Schritt (82) wird zu der jeweils eingestellten Frequenz des Wechselrichters (5), von der die Drehzahl des Induktionsmotors bestimmt wird, aus der gespeicherten Sollwertkennlinie die Spannung ausgelesen. In einem Schritt (83) werden der gemessene Istwert U der Spannung am Wechselrichtereingang mit dem Sollwert $U_{soll}$ verglichen. Stimmen Istwert und Sollwert überein, dann wird der Schritt (82) wiederholt. Stimmen die Werte nicht überein, dann wird ein Schritt (84) ausgeführt, in dem gefragt wird, ob der Istwert U kleiner als der Sollwert $U_{soll}$ ist. Wenn dies zutrifft, dann werden in einem Schritt (85) die Wechselrichterfrequenz und die Spannung U am Wechselrichtereingang erhöht. Die Spannungserhöhung wird durch eine größere Spannungszeitfläche der gleichgerichteten Spannung bewirkt, d.h. der Anschnittwinkel wird verkleinert bzw. der Abschnittwinkel erhöht oder der Ausschnittwinkelbereich verkleinert. Das Maß der Änderung der Frequenz und der Spannung ist vorzugsweise durch eine oder mehrere Bits bestimmt, d.h. durch eine digitale Einheit. Danach wird wiederum der Schritt (81) ausgeführt.

Wenn der Sollwert $U_{soll}$ nicht größer als der Istwert U ist, dann wird ein Schritt (86) ausgeführt, in dem die Wechselrichterfrequenz und die Spannung am Wechselrichtereingang reduziert werden. Die Verminderung der Spannung am Wechselrichtereingang wird durch die Verkleinerung der Spannungszeitfläche der gleichgerichteten Spannung bewirkt, indem der Anschnittwinkel vergrößert bzw. der Abschnittwinkel verkleinert oder der Ausschnittwinkelbereich verkleinert wird. An den Schritt (86) schließt sich der Schritt (81) an.

Bei jeder Laständerung bleibt zunächst die Frequenz des Wechselrichters (5) gleich. Indem der Regelkreis die Leistungsaufnahme auf einen möglichst geringen Wert einstellt, erhöht oder erniedrigt sich die Eingangsspannung des Wechselrichters (5) je nach der Stromzu- oder -abnahme. Diese Spannungsänderung hängt von der Last und damit von der geänderten Fördermenge der Kreiselpumpe ab. Die Laständerung kennzeichnet eine Istwertänderung, die durch Änderung der Frequenz des Wechselrichters (5) und der Wechselrichtereingangsspannung derart ausgeglichen wird, daß ein neuer Punkt auf der Sollwertkennlinie erreicht wird. Mit dem Regelkreis wird ein optimaler Arbeitspunkt gemäß der Sollwertkennlinie eingestellt. Dieser Arbeitspunkt entspricht einem optimalen Wirkungsgrad der Anordnung bei dem jeweiligen Lastfall. Hierdurch bleibt auch der Differenzdruck im Flüssigkeitskreislauf der Pumpe gleich. Es ist daher möglich, die Drehzahl einer Pumpe ohne Drehzahlsensor nach einer vorgegebenen Führungsgrößenkennlinie zu regeln.

Die in Fig. 2 dargestellte Sollwertkurve entspricht der Formel $U_{Phase} = U_{Netz} \cdot (f/fmax)^2 + K (1-f/fmax)$, worin mit U die Spannung, mit f die Frequenz und mit K eine Konstante bezeichnet sind. Die Wechselrichtereingangsspannung ist für 380 V verkettete Netzspannung $U_{Gleich} = U_{Phase} \cdot \frac{465}{380}$ [V].

Die obigen Beziehungen gelten nur für das Drehmomentverhalten $M \sim n^2$. Für andere Arbeitsmaschinen sind andere Sollwertkurven maßgebend.

Wenn z.B. bei einer gerade vorgegebenen Fre-

quenz $f_1$ des Wechselrichters (5) und einer vorhandenen Eingangsspannung $U_1$ am Wechselrichter eine Laständerung einer bestimmten Größe auftritt, springt die Eingangsspannung bei gleicher Frequenz $f_1$ auf den Spannungswert $U_2$, der auf die oben beschriebene Weise festgestellt wird und eine Spannungs- und Frequenzänderung auslöst. Unter der Annahme, daß sich beide Größen linear erniedrigen, wird eine in Fig. 2 dargestellte Gerade (87) durchlaufen, die die Sollwertkennlinie (88) in einem Punkt (89) schneidet, der eine Eingangsspannung $U_3$ und eine Frequenz $f_2$ zugeordnet ist. Im Schnittpunkt (89) wird die Spannungs- und Frequenzänderung beendet. Die Drehzahl des Induktionsmotors (1) ist mit ausreichender Genauigkeit der Wechselrichterfrequenz proportional.

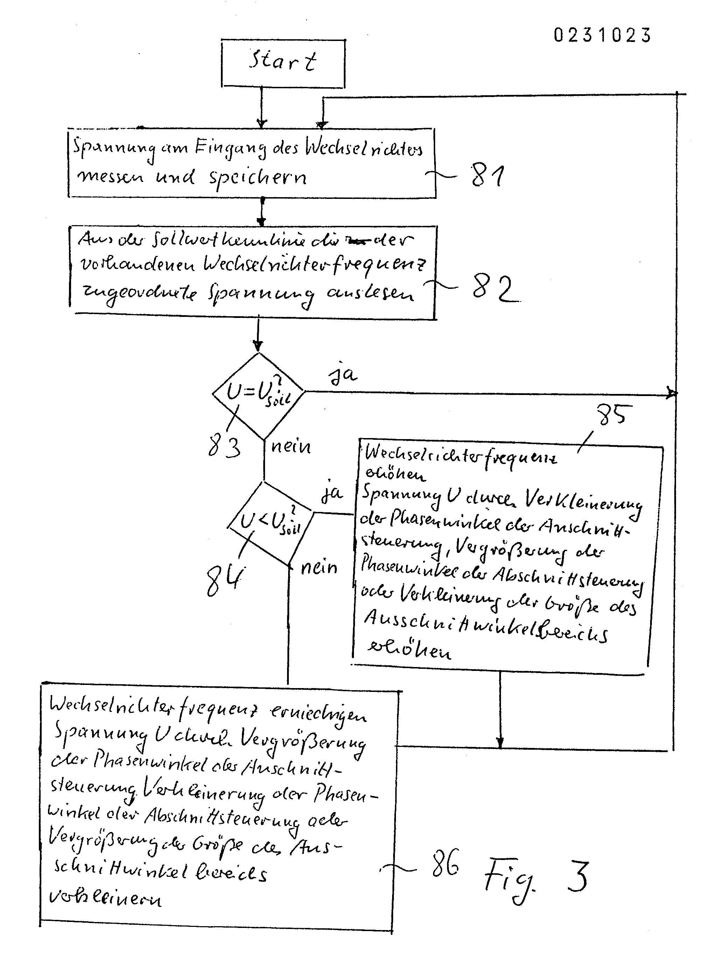

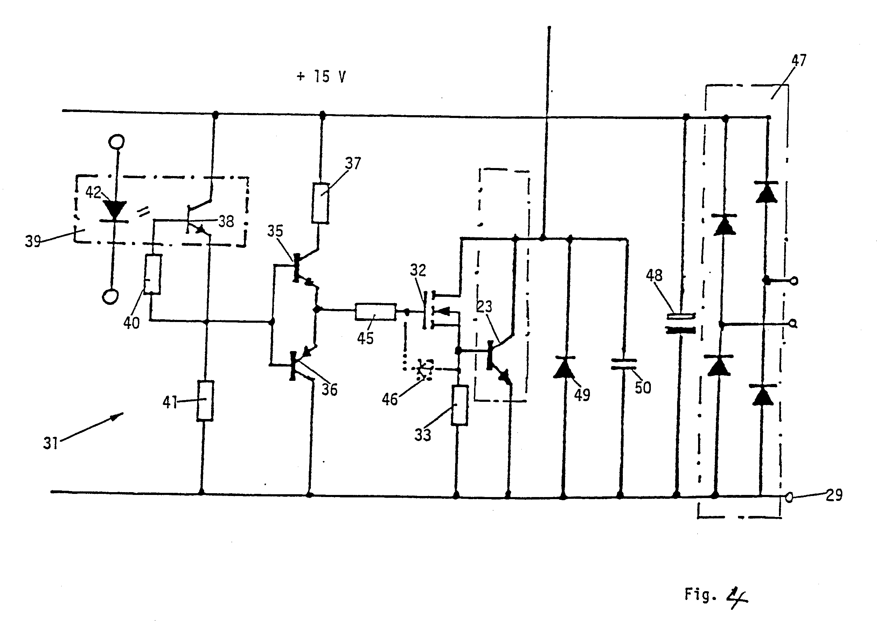

Die Fig. 4 zeigt eine Ansteuerschaltung (31) für einen als ein-und ausschaltbares Stromrichterventil verwendeten bipolaren Transistor (23), der als npn-Transistor ausgebildet ist. Gleiche Teile wie in Fig. 1 sind bei der Schaltungsanordnung gemäß Fig. 2 und den Schaltungen der Fig. 3 bis 6 mit gleichen Bezugsziffern versehen. In gleicher Weise wie bei der in Fig. 1 gezeigten Schaltungsanordnung enthält der Optokoppler (39) eine Lumineszenzdiode (42) und einen Phototransistor (38), der an der Basis mit dem Widerstand (40) und am Emitter mit dem Widerstand (41) angeschlossen ist. Die Transistoren (35), (36) sind in gleicher Weise wie bei der Schaltung gemäß Fig. 1 miteinander sowie mit dem Widerstand (37) und dem Phototransistor (38) verbunden. Die Emitter der Transistoren (35), (36) sind über einen Widerstand an die Gate-Elektrode des IG-Feldeffekttransistors (32) angeschlossen. Zwischen der Gate-Elektrode des Feldeffekttransistors (32) und der Source-Elektrode kann eine Zener-Diode (46) als Schutz vor zu hohen Gate-Spannungen angeordnet sein. Die Gleichspannung von z.B. 15 V gegen den Ausgang (29) zum Ansteuern des Gates wird mit einer Graetz-Schaltung (47) aus einer Wechselspannung erzeugt, deren Quelle nicht dargestellt ist. Parallel zu den gleichstromseitigen Ausgängen der Graetz-Schaltung (47) ist ein Kondensator (48) angeordnet.

Zu der Kollektor-Emitter-Strecke des bipolaren Transistors (23) sind eine Freilaufdiode (49) und ein Kondensator (50) parallel geschaltet, die Rückwirkungen vom Induktionsmotor kompensieren.

Es ist günstig, die in Fig. 4 dargestellte Anordnung als integrierte Schaltung unter Ausnahme des Optokopplers (39) auszubilden. Eine solche integrierte Schaltung enthält insofern mehr als die in Fig. 4 dargestellten elektronischen Bauteile, als die Ansteuerschaltungen für zwei oder mehr bipolare Transistoren ebenfalls Bestandteile sind. Die Gleichrichterbrücken- bzw. Graetz-Schaltung (47) ist für alle Ansteuerschaltungen nur einmal vorhanden. Um einen integrierten Baustein für verschiedene Leistungen verwenden zu können, ist es unter Umständen zweckmäßig, den bipolaren Transistor (23) nicht in den Halbleiterkristall zu integrierten. Ein solcher Baustein läßt sich für einen gewissen Leistungsbereich einsetzen. Es können bipolare Transistoren (23) mit verschiedenen Nennströmen verwendet werden. Außerdem wird hierdurch vermieden, daß die Verlustwärme der bipolaren Transistoren (23) die anderen Schaltungsteile beeinträchtigt. Überdies läßt sich die Verlustwärme aus einem diskreten bipolaren Transistor (23) einfacher, z.B. mit einem entsprechenden dimensionierten Kühlkörper ableiten. Da der vorstehend beschriebene Halbleiterkristall einen n-Kanal-MOSFET und bipolare Transistoren enthält, wird eine Technik geschaffen, die sich als BIPMOS bezeichnen läßt.

Ein Halbleiterkristall muß nicht alle oben erwähnten Bauelemente enthalten. Es kann z.B. günstig sein, für jeden bipolaren Transistor (23), (24), (25) eine gesonderte integrierte Schaltung vorzusehen, die sich dann universell für verschiedene Arten von Gleichrichterbrückenschaltungen einsetzen läßt.

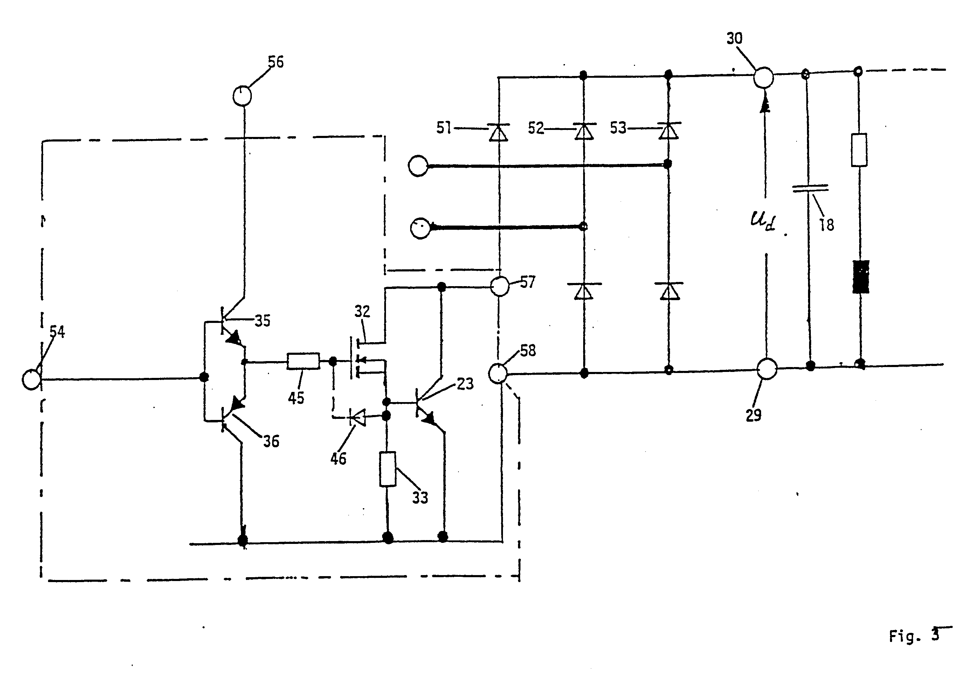

Die Fig. 5 zeigt in vereinfachter Form eine dreiphasige Gleichrichterbrückenschaltung mit drei Dioden (51), (52), (53) je in einem Brückenkreis. Die Ansteuerschaltung enthält die beiden Transistoren (35), (36) in Gegentaktanordnung, deren Ausgang über den Widerstand (45) mit der Gate-Elektrode des MOS-Feldeffekttransistors (32) verbunden ist. Die Transistoren (35) und (36) sind je mit den Kollektoren an die Pole einer Betriebsspannungsquelle gelegt. Die beiden Basen der Transistoren (35), (36) sind mit einem Anschluß (54) verbunden, der von unterschiedlichen Schaltungen aus angesteuert werden kann. Beispielsweise ist nicht in allen Anwendungsfällen ein Optokoppler notwendig. Die in Fig. 3 innerhalb der strichpunktierten Linie (55) liegenden Bauteile (23), (32), (33), (35), (36), (45), (46) können Bestandteil einer integrierten Schaltung sein, die den Anschluß (54) und nur drei weitere Anschlüsse (56), (57), (58) hat. In Fig. 3 sind die über die Dioden (51), (52), (53) fließenden Ströme mit $i_1'$, $i_2'$ und $i_3'$ bezeichnet. Die Gleichspannung ist mit $U_d$ bezeichnet. Parallel zum Kondensator (18) ist die Reihenschaltung eines Widerstandes und einer Induktivität angeordnet. Diese elektrischen Bauteile sind nicht näher bezeichnet. Es handelt sich um eine Verbraucherersatzschaltung eines induktiven Verbrauchers.

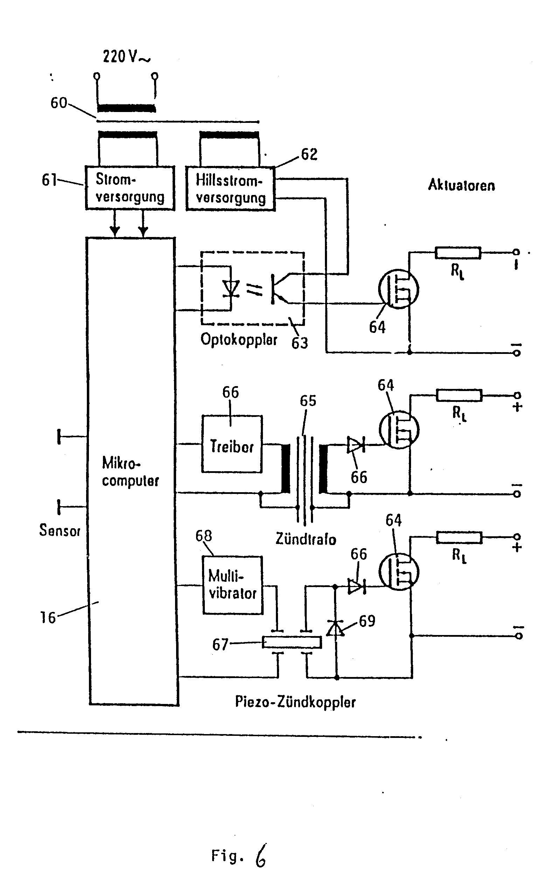

Bei der in Fig. 6 dargestellten Schaltung ist ein Netztransformator (60) sekundärseitig an eine Stromversorgungsschaltung (61) angeschlossen, die die Betriebsspannung für den Mikrocomputer (16) erzeugt. Der Netztransformator (60) enthält eine zweite Sekundärwicklung, die mit einer Hilfsstromversorgung (62) verbunden ist, die einen Optokoppler (63) mit Betriebsspannung versorgt. Der Optokoppler (63) ist zwischen Ausgängen des Mikrocomputers (16) und einem MOS-Feldeffekttransistor (64) angeordnet, der auf die in Fig. 1 gezeigte Art mit einem bipolaren, nicht dargestellten Transistor verbunden ist. Die Last des MOS-Feldeffekttransistors (64) ist mit $R_L$ bezeichnet.

Mit einem Zündtransformator (65), der über eine Treiberstufe (66) an den Mikrocomputer (16) angeschlossen ist, kann eine andersartige galvanische Trennung erreicht werden. Die Sekundärseite des Zündtransformators (65) ist über eine Diode (66) an die Gate-Elektrode eines MOS-Feldeffekttransistors (64) angeschlossen, der im übrigen wie oben beschrieben mit einem bipolarem Transistor in einem Brückengleichrichter oder Wechselrichter verbunden ist.

Eine dritte Möglichkeit zur galvanisch getrennten Ankopplung nutzt einen Piezo-Zündkoppler (67) aus, der über einen vom Mikrocomputer (16) ein- und ausschaltbaren astabilen Multivibrator (68) mit dem Mikrocomputer (16) verbunden ist. Sekundärseitig ist der Piezo-Zündkoppler (67) über die Diode (66) mit der Gate-Elektrode eines MOS-Feldeffekttransistors (64) verbunden, der einen bipolaren Transistor im Brückengleichrichter oder Wechselrichter speist. Parallel zu den sekundären Elektroden des Piezo-Zündkopplers (67) ist eine Diode (69) angeordnet.

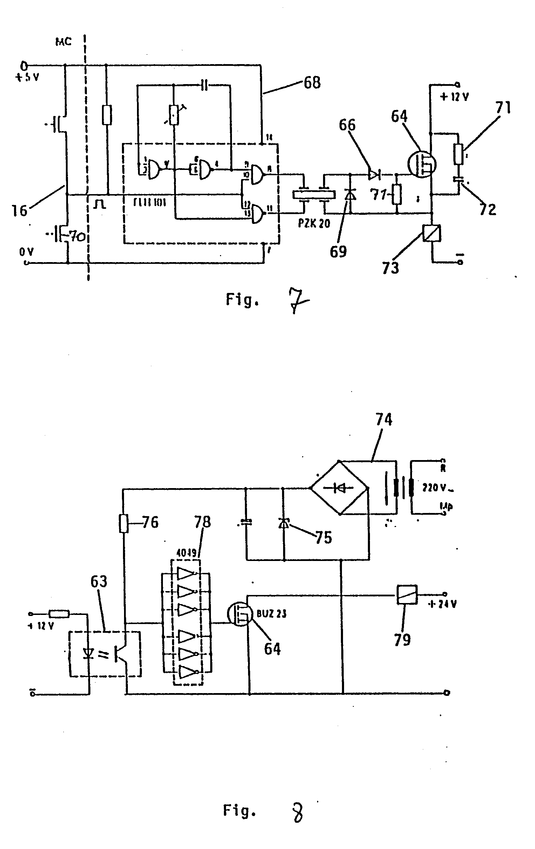

Die Fig. 7 zeigt im Detail zwei mit den Drain-Source-Strecken in Reihe angeordnete Ausgangs-Feldeffekttransistoren des Mikrocomputers. An die gemeinsame Verbindungsstelle der nicht näher bezeichneten Ausgangs-Feldeffekttransistoren ist ein Steuereingang (70) des astabilen Multivibrators (68) angeschlossen, der aus einem durch einen äußeren RC-Kreis beschalteten integrierten Schaltkreis besteht. Die Gate-Elektrode des MOS-Feldeffekttransistors (64) ist mit der Source-Elektrode über einen Widerstand (71) verbunden. Parallel zu der Drain-Source-Strecke ist die Reihenschaltung eines Widerstandes (71) und eines Kondensators (72) gelegt. Im Source-Kreis befindet sich eine Last (73).

Die Fig. 8 zeigt im Detail die Optokopplerverbindung. Der Transistor des Optokopplers (63) wird von einer Gleichrichterschaltung (74) mit nachgeschalteter Zener-Diode (75) über einen Widerstand (76) mit Betriebsspannung versorgt. Der Kollektor des Transistors des Optokopplers (63) ist über invertierende Verstärkerstufen (78) mit der Gate-Elektrode eines MOS-Feldeffekttransistors (64) verbunden, in dessen Drain-Kreis eine Last (79) angeordnet ist.

Statt der Feldeffekttransistoren (9) bis (15) können bipolare Transistoren in Verbindung mit MOS-Feldeffekttransistoren verwendet werden, wie dies bei der Gleichrichterbrückenschaltung eingehend beschrieben ist.

**Patentansprüche**

1. Schaltungsanordnung mit einer von einer ein- oder mehrphasigen Spannung beaufschlagten, gesteuerten Gleichrichterbrückenschaltung, die ein und ausschaltbare Stromrichterventile enthält und an die eine Energiespeichereinrichtung angeschlossen ist, der ein Wechselrichter nachgeschaltet ist, dessen Stromrichterventile mit ihren Steuerelektroden an Ausgänge eines Mikrocomputers angeschlossen sind, der mit weiteren Ausgängen an die Steuereleketroden der Stromrichterventile der Gleichrichterbrückenschaltung angeschlossen ist, wobei der Wechselrichter einen Induktionsmotor speist, dessen Drehzahl durch die Frequenz des Wechselrichters steuerbar ist,

**dadurch gekennzeichnet,**

daß die Spannung am Eingang des Wechselrichters (5) über einen Analog-Digital-Umsetzer (80) dem Mikrocomputer (16) zuführbar ist, in dem eine Sollwertkennlinie der Spannung des Eingangs des Wechselrichters (5) als Funktion der Frequenz des Wechselrichters (5) gespeichert ist, daß die Spannung am Eingang des Wechselrichters (5) mit der Spannung der Sollwertkennlinie verglichen wird und daß die Frequenz des Wechselrichters (5) und die Spannung am Eingang des Wechselrichters (5) verändert werden, bis ein Spannungswert der Sollwertkennlinie und die Spannung am Eingang des Wechselrichters (5) einander entsprechen.

2. Schaltungsanordnung nach Anspruch 1,
**dadurch gekennzeichnet,**
daß die Spannung am Eingang des Wechselrichters (5) durch Phasenanschnitt-, Phasenabschnitt- und/oder Phasenausschnittsteuerung verändert wird und daß die Frequenz des Wechselrichters durch die Periode der vom Mikrocomputer erzeugten Impulse gesteuert wird.

3. Schaltungsanordnung nach Anspruch 1 oder 2,
**dadurch gekennzeichnet,**
daß die Spannung der Sollwertkennlinie der Frequenz des Wechselrichters (5) proportional ist und daß eine Kreiselpumpe, ein Kreiselverdichter oder ein Lüfter mit dem Induktionsmotor (1) verbunden ist.

4. Schaltungsanordnung nach einem der vorhergehenden Ansprüche,
**dadurch gekennzeichnet,**
daß das dem Analog-Digital-Umsetzer (80) entnommene Bitmuster bei einer mit dem Wechselrichter (5) erzeugten Frequenz mit dem im Mikrocomputer zu dieser Frequenz gespeicherten Bitmuster verglichen wird und daß bei einer Abweichung die Frequenz des Wechselrichters (5) und die Spannung am Eingang des Wechselrichters (5) über die Stromrichterventile der Gleichrichterbrückenschaltung so lange geändert werden, bis die Bitmuster übereinstimmen.

5. Schaltungsanordnung nach einem der vorhergehenden Ansprüche,
**dadurch gekennzeichnet,**
daß die Spannungsänderung proportional zur Frequenzänderung ist.

6. Schaltungsanordung nach einem der vorhergehenden Ansprüche,
**dadurch gekennzeichnet,**
daß die ein- und ausschaltbaren Stromrichterventile in der Gleichrichterbrückenschaltung (7) bipolare Transistoren (23, 24, 25) sind, deren Basen jeweils über die Drain-Source-Strecken von MOS-Feldeffekttransistoren (32) an den netzseitigen Eingang der Gleichrichterbrückenschaltung (7) gelegt sind, und daß die Gate-Elektroden der MOS-Feldeffekttransistoren (32) mit Ausgängen des Mikrocomputers (16) verbunden sind.

7. Schaltungsanordnung nach einem der vorhergehenden Ansprüche,
**dadurch gekennzeichnet,**

daß die Energiespeichereinrichtung mindestens eine, zwischen der Gleichrichterbrückenschaltung (7) und dem Wechselrichter (5) angeordnete Drossel (17) und mindestens einen zum Eingang des Wechselrichters (5) parallel geschalteten Kondensator (19) enthält.

8. Schaltungsanordnung nach einem der vorhergehenden Ansprüche,
**dadurch gekennzeichnet,**
daß Stromrichterventile des Wechselrichters bipolare Transistoren sind, deren Basen jeweils über die Drain-Source-Strecken von MOS-Feldeffekttransistoren an den gleichstromseitigen Eingang des Wechselrichters (5) gelegt sind, und daß die Gate-Elektroden der MOS-Feldeffekttransistoren des Wechselrichters (5) mit Ausgängen des Mikrocomputers (16) verbunden sind.

9. Schaltungsanordnung nach einem der vorhergehenden Ansprüche,
**dadurch gekennzeichnet,**
daß die Gate-Elektroden der MOS-Feldeffekttransistoren (64) je über eine galvanische Trennstelle mit dem jeweiligen Ausgang des Mikrocomputers (16) verbunden sind.

10. Schaltungsanordnung nach einem der vorhergehenden Ansprüche,
**dadurch gekennzeichnet,**
daß die Gate-Elektroden der MOS-Feldeffekttransistoren (32) an Ausgänge von Zweirichtungs-Verstärkern (34) mit einem Paar komplementärer Ausgangstransistoren angeschlossen sind, die von Signalen des Mikrocomputers (16) steuerbar sind.

11. Schaltungsanordnung nach einem der vorhergehenden Ansprüche,
**dadurch gekennzeichnet,**
daß die Basis des jeweiligen bipolaren Transistors (23, 24, 25) weiterhin über einen Widerstand (33) mit dem Emitter verbunden ist.

12. Schaltungsanordnung nach einem der vorhergehenden Ansprüche,
**dadurch gekennzeichnet,**
daß die Basen der mit ihren Kollektor-Emitter-Strecken in Reihe geschalteten Transistoren (35, 36) des jeweiligen Zweirichtungs-Verstärkers (34) über einen Optokoppler (39) mit dem entsprechenden Ausgang des Mikrocomputers (16) verbunden sind.

13. Schaltungsanordnung nach einem der vorhergehenden Ansprüche,
**dadurch gekennzeichnet,**
daß die bipolaren Transistoren (23, 24, 25) eines jeden Stromrichterventils der Gleichrichterbrückenschaltung (7) zumindest zusammen mit dem MOS-Feldeffekttransistor (32) in einem Halbleiterkristall integriert sind.

14. Schaltungsanordnung nach einem der · Ansprüche 1 bis 7,
**dadurch gekennzeichnet,**
daß zumindest die Zweirichtungs-Verstärker (34) zusammen mit dem MOS-Feldeffekttransistor (32) für jede Ansteuerschaltung (31) eines bipolaren Transistors (23, 24, 25) in einem Halbleiterkristall integriert sind.

15. Schaltungsanordnung nach Anspruch 8 oder 9,
**dadurch gekennzeichnet,**
daß zumindest die Ansteuerschaltungen für zwei oder drei bipolare Transistoren (23, 24, 25) in einem Halbleiterkristall zusammen mit einer Graetz-Schaltung (47) integriert sind.

16. Schaltungsanordnung nach einem der Ansprüche 1 bis 8 oder 13,
**dadurch gekennzeichnet,**
daß die Gate-Elektroden der MOS-Feldeffekttransistoren (64) je über einen Gleichrichter (66) mit einem Zündtransformator (65) verbunden sind, der vom Mikrocomputer (16) über eine Treiberstufe (66) gespeist wird.

17. Schaltungsanordnung nach einem der Ansprüche 1 bis 8 oder 13,
**dadurch gekennzeichnet,**
daß die Gate-Elektroden der MOS-Feldeffekttransistoren je über einen Gleichrichter (66) mit einem Piezo-Zündkoppler (67) verbunden sind, der vom Mikrocomputer (16) über einen Multivibrator (68) gespeist wird.

18. Schaltungsanordnung nach einem der vorhergehenden Ansprüche,
**dadurch gekennzeichnet,**
daß der Mikrocomputer (16) einen 8-Bit-Mikroprozessor, einen Programmspeicher, einen Speicher mit wahlfreiem Zugriff, mindestens einen Ereigniszähler bzw. internen Zeitgeber und Eingabe-, Ausgabeschaltungen für den Anschluß an die Stromrichterventile der Gleichrichterbrückenschaltung und des Wechselrichters (5) und an eine Netzstrommeßeinrichtung (43) sowie an eine Netzspannungsmeßeinrichtung (44) enthält, wobei ein Befehlszyklus von 5 bis 10 μsec vorgesehen ist.

Fig. 1

0231023

Fig.2

0231023

Start

Spannung am Eingang des Wechselrichters messen und speichern ~ 81

Aus der Sollwertkennlinie die der vorhandenen Wechselrichterfrequenz zugeordnete Spannung auslesen ~ 82

$U = U_{soll}^?$  83  ja / nein

$U < U_{soll}^?$  84  ja / nein

85
Wechselrichterfrequenz erhöhen Spannung U durch Verkleinerung der Phasenwinkel der Anschnittsteuerung, Vergrößerung der Phasenwinkel der Abschnittsteuerung oder Verkleinerung der Größe des Ausschnittwinkelbereichs erhöhen

Wechselrichterfrequenz erniedrigen Spannung U durch Vergrößerung der Phasenwinkel der Anschnittsteuerung, Verkleinerung der Phasenwinkel der Abschnittsteuerung oder Vergrößerung der Größe des Ausschnittwinkelbereichs verkleinern ~ 86

Fig. 3

+ 15 V

Fig. 4

$u_d$

Fig. 5

0231023

220 V~

60

61 — Stromversorgung

62
Hillsstromversorgung

Aktualoren

Optokoppler  63

64

R_L

66

65

64

Treiber

66

R_L

Mikrocomputer

Zündtrafo

64

Sensor

68

66

R_L

Multivibrator

69

16

67

Piezo-Zündkoppler

Fig. 6

0231023

Fig. 7

Fig. 8